# EUROPÄISCHE PATENTSCHRIFT

(11) **EP 1 932 974 B1**
(45) Veröffentlichungstag und Bekanntmachung des Hinweises auf die Patenterteilung: **25.02.2009**
(21) Anmeldenummer: 06026074.2
(22) Anmeldetag: 15.12.2006
(51) Int. Cl.: E03F 1/00

(54) **Versickerungsmodul**
Infiltration block
Bloc d'infiltration

(43) Veröffentlichungstag der Anmeldung: 18.06.2008
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(56) Entgegenhaltungen:
- EP-A- 1 607 535
- DE-A1- 19 705 824

## Beschreibung

Die Erfindung betrifft ein Versickerungsmodul aus Kunststoff entsprechend dem Oberbegriff des Patentanspruchs 1.

Das aus der Broschüre V26EN, Edition 2006/2007, "Stormwater Management" der Firma Otto Graf GmbH, D-79331 Teningen, DE, Seiten 4 und 5, bekannte Versickerungsmodul ist ein quaderförmiger Gitterstrukturkasten, in dessen Innenkammern von der Deckplatte zur Grundplatte verlaufende Stützsäulen vorgesehen sind.

Das aus EP 1 260 640 A bekannte Versickerungsmodul wird entweder aus zwei spiegelbildlich zusammengesetzten Untereinheiten gebildet, oder ist einstückig, derart dass zwischen zwei voneinander abgewandten Seitenwänden ein durchgehender Inspektionskanal freigehalten bleibt. Die Weite des Inspektionskanals beträgt ca. ein Drittel der Seitenlänge des Moduls. In den Hohlräumen zwischen den Außenwänden und dem Inspektionskanal verlaufen Stützsäulen zwischen der Deckplatte und der Grundplatte.

Das aus EP 1 607 535 A bekannte Versickerungsmodul ist ein langgestreckter quaderförmiger Gitterstrukturkasten, bei dem zwei voneinander wegweisende Längsseitenwände vollflächig verkleidet sind. Zwischen diesen vollflächig verkleideten Längsseitenwänden erstrecken sich beabstandet zwei annähernd rechteckige oder annähernd quadratische Inspektionskanäle, deren Mündungen in den Verkleidungen liegen. Im Inneren des Versickerungsmoduls ist zwischen den Inspektionskanälen eine Querverbindung geformt. Die Öffnungsgröße der Mündungen der Inspektionskanäle beträgt zwischen 30% und 60% der entsprechenden Außenwandfläche. Die Mündungen könne wahlweise mit Einsetzplatten verschlossen werden, die eine wasserdurchlässige Gitterstruktur aufweisen.

Aus DE 197 05 824 A ist es bekannt, zur Herstellung von Mulden-Rigolen-Systemen würfelförmige Rigolenelemente einzugraben, deren sechs Wände eine Geogitterstruktur aufweisen. Der von den Wänden umschlossene Stauraum wird mit einer Schüttung aus einem Poren bildenden Material gefüllt. Gegebenenfalls ist zur nachträglichen Befüllung des Stauraums eine Wand nach Art eines Deckels zu öffnen oder abzunehmen. In zwei gegenüberliegenden Seitenwänden sind Anschlüsse für Drainagerohre zueinander versetzt platziert.

Der Erfindung liegt die Aufgabe zu Grunde, ein Versickerungsmodul der eingangs genannten Art zu schaffen, das mit minimalem Materialaufwand optimale Gestaltfestigkeit und optimales Aufnahmevermögen hat, einfach handhabbar ist, und die Erstellung beliebig großer, befahrbarer Versickerungsanlagen ermöglicht, die an verschiedenen Stellen wahlweise inspizierbar sind.

Die gestellte Aufgabe wird mit den Merkmalen des Patentanspruchs 1 gelöst.

Die geometrisch klare Würfelform mit den Einsetzöffnungen in allen Außenwänden erbringt bei minimalem Materialeinsatz optimale Gestalt-Festigkeit und ein maximales Aufnahmevermögen. Das Modul lässt sich mit gleichen Modulen zu beliebig großen Versickerungsanlagen kombinieren, ist einfach handhabbar, und ermöglicht nach Entnahme der Einsetzplatte eine unbehinderte Inspektion bzw. Reinigung. Die Gitterstruktur des Grundkörpers ist nicht notwendiger Weise wasserdurchlässig, sondern die Einsetzplatten ermöglichen den Eintritt bzw. Austritt des Wassers. Dank der eingesetzten Einsetzplatten wird für eine umhüllende Vlieslage eine ebene großflächige Abstützung gewährleistet. Bei mehreren übereinander angeordneten Lagen aus solchen Versickerungsmodulen wird keine Zwischenplatte benötigt, da die Deckwand eines Moduls jeweils die Grundplatte für das darauf gesetzte Modul bildet. Da die Außenwände eben und senkrecht zu einander sind, lassen sich die Module bequem ganz dicht aneinander setzen und miteinander verbinden. Die Einsetzöffnungsgröße ist so gewählt, dass nach Entnahme eine Einsetzplatte bequem Zugang zur Inspektion bzw. zur Reinigung vorliegt, wobei es von Vorteil ist, dass jede Innenkammer eines Moduls frei ist von Verstrebungen und Stützsäulen. Andererseits ist die Einsetzöffnungsgröße so gewählt, dass jedes Modul optimale Gestaltfestigkeit hat, d.h., durch die Einsetzöffnungen im Grundkörper definierte Stützsäulen sehr stabil sind und Lasten in vertikaler Richtung wie in horizontaler Richtung gut abtragen.

Dabei tragen bei einer Ausführungsform innenseitige Auskleidungen der Einsetzöffnungen zur Steifigkeit und Knick-Festigkeit bei.

Es ist allerdings möglich, die Auskleidungen zumindest bereichsweise mit der Gitterstruktur kommunizierenden Durchlässen zu versehen. Solche Durchlässe können auch zum Verankern der Einsetzplatten herangezogen werden (z.B. Schnappverbindungen).

Die Gestaltfestigkeit jeder Einsetzplatte wird durch eine umfängliche Verkleidung erhöht. Diese Verkleidung verbessert auch den Sitz der eingebauten Einsetzplatte in der Einsetzöffnung und kann Elemente zum Einschnappen aufweisen. Die Dicke der Einsetzplatte und die Umrisskontur ihrer umfänglichen Verkleidung sind so gewählt, dass die freie Innenkammer des mit Einsetzplatten bestückten Moduls keine Kanten oder Schultern hat, an denen sich Verschmutzungen absetzen könnten. Es wird so eine glatte Innenkammer gebildet.

Um zuleitende oder ableitende Rohre anschließen zu können, ist, vorzugsweise, in jeder Einsetzplatte ein Ausschneidemuster in die Gitterstruktur eingegliedert. Dieses Ausschneidemuster kann für unterschiedliche Rohrdurchmesser konzipiert und entsprechend ausgeschnitten werden.

Bei einer zweckmäßigen Ausführungsform umfassen die Gitterstrukturen einander rechtwinkelig kreuzende Quer- und Längsstege, die überwiegend gleichgroße quadratische Felder begrenzen. Hierdurch wird eine gleichförmige Lastabtragung unter Lasten aus verschiedenen Richtungen erzielt.

Bei einer bevorzugten Ausführungsform sind entlang der Würfelkanten in die Gitterstrukturen integrierte, verrippte und nicht oder nur teilweise wasserdurchlässige Aussteifungs-Profilierungen vorgesehen. Diese Profilierungen befinden sich somit an statisch günstigen Stellen und bilden sozusagen in die Stützsäulen integrierte tragende Skelette, so dass die Innenkammer vollständig frei bleibt, und dennoch hohe Gestaltfestigkeit erzielt wird.

Zweckmäßig sind in jeder Aussteifungs-Profilierung zwei senkrecht zueinander geführte Längsstege vorgesehen, zwischen denen ein winkelhalbierender Längssteg eingesetzt ist. Diese drei Längsstege werden durch verlängerte Querstäbe der Gitterstruktur ausgesteift.

Zusätzlich können die Würfelecken dadurch verstärkt sein, dass an jeder Würfelecke zusätzlich drei Diagonalstege zusammengeführt sind Dort wird eine für umhüllendes Vlies günstige Rundung oder Kuppe gebildet.

Bei einer zweckmäßigen Ausführungsform weist die Umrisskontur jeder Einsetzöffnung gerundete Eckbereiche und die Eckbereiche verbindende, nach außen konkav gewölbte, symmetrische Abschnitte auf. Die Wölbung der symmetrischen Abschnitte ist flacher als die Wölbung in der Rundung jedes Eckbereiches. Diese Ausbildung führt zu statisch günstigen Stützsäulen, die von den Einsetzöffnungen begrenzt sind.

Durch die einander gleichenden Einsetzöffnungen in den sechs Außenwänden des Grundkörpers, welche Einsetzöffnungen in jeder Außenwand und der gleichen Position und mit gleicher Größe geformt sind, werden insgesamt acht taillierte Stützsäulen im Grundkörper gebildet.

Zweckmäßig ist jede Einsetzplatte lösbar in der Einsetzöffnung festlegbar, z.B. mit der erwähnten Schnappverbindung, so dass sie jederzeit auch wieder entnommen und erneut eingesetzt werden kann.

Das Versickerungsmodul ist ein einstückiges Spritzguss-Formteil und kann eine Seitenlänge von etwa 0,5 m bis 1,2 m haben. Mit dieser Dimensionierung sind die Versickerungsmodule bequem handhabbar und lassen sich auch große Versickerungsanlagen erstellen.

Das Versickerungsmodul könnte, z.B. bei kleineren Baugrößen, aus mehreren bereits einstückig miteinander geformten Würfeln bestehen.

Ferner könnte, z.B. bei großen Baugrößen, der Grundkörper aus einzeln geformten Teilen gefügt sein.

Anhand der Zeichnung wird eine Ausführungsform des Erfindungsgegenstandes erläutert.

Es zeigen:
- Fig. 1: eine Perspektivansicht eines Grundkörpers eines Versickerungsmoduls,
- Fig. 2: das Versickerungsmodul von Fig. 1 mit einer einsetzbaren Einsetzplatte,
- Fig. 3: eine Perspektivansicht einer Versickerungsanlage, die aus mehreren Versickerungsmodulen der Fig. 1 und 2 erstellt wird, und
- Fig. 4: eine Perspektivansicht der fertiggestellten Versickerungsanlage von Fig. 3.

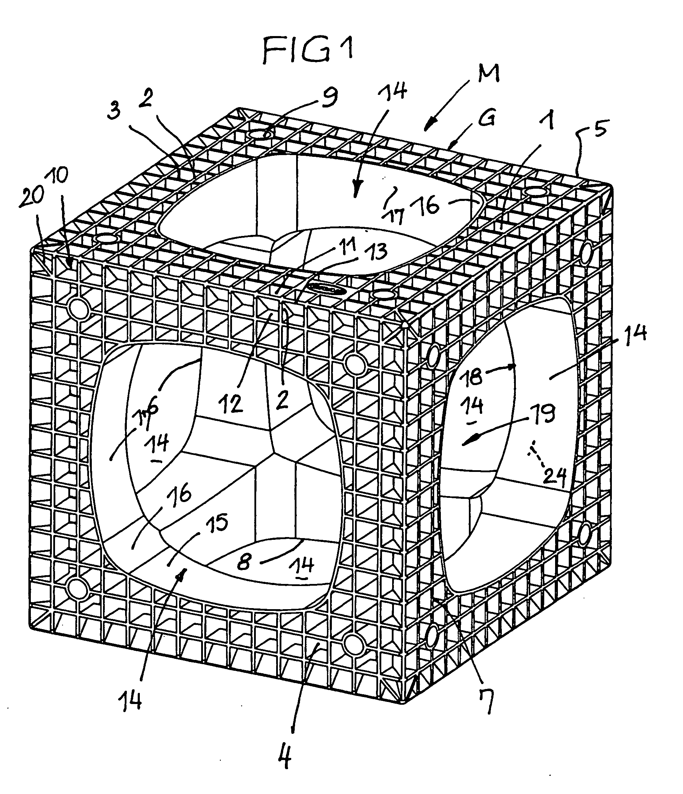

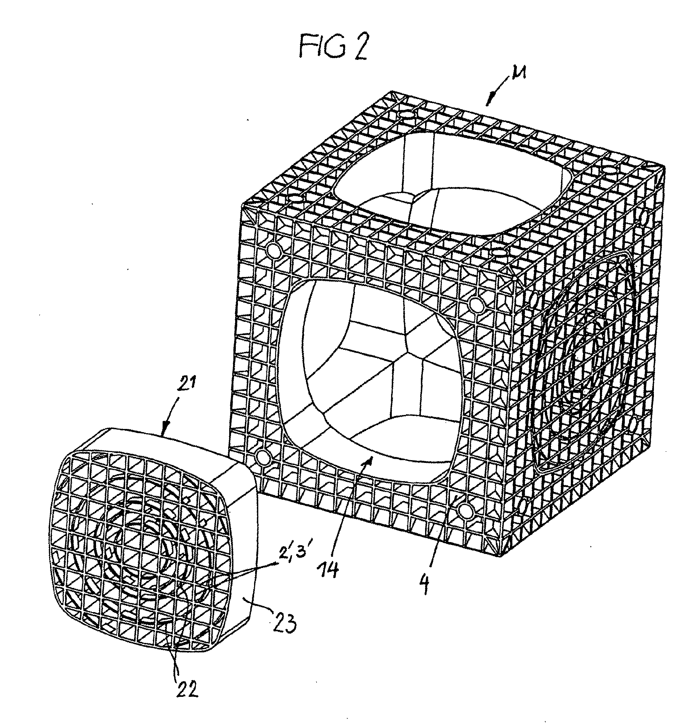

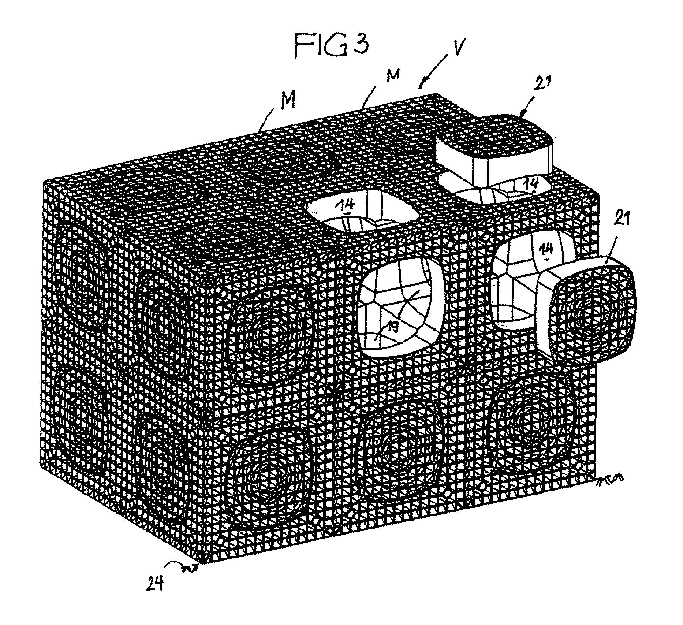

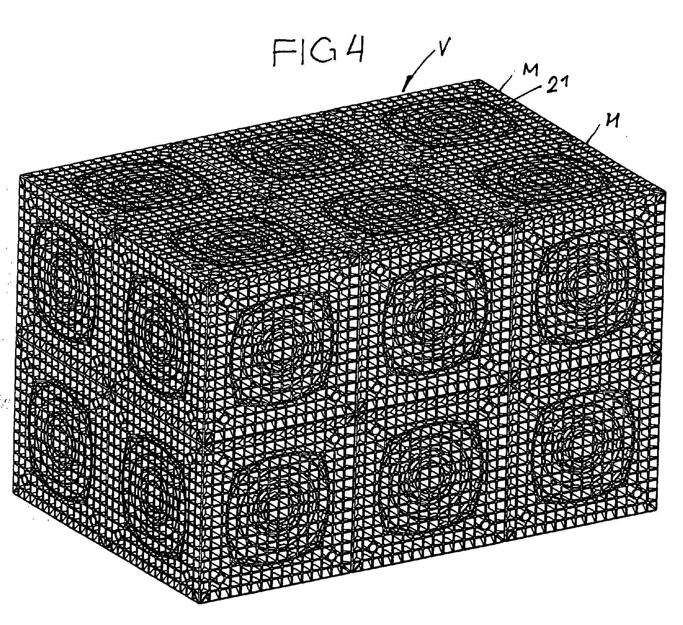

Ein in den Fig. 1 und 2 gezeigtes Versickerungsmodul M ist ein Kunststoff- Spritzgussteil in einstückiger Ausführung und wird beispielsweise in einer sogenannten Backenform produziert. Das Versickerungsmodul M dient zum Erstellen von Versickerungsanlagen wie beispielsweise in den Fig. 3 und 4 angedeutet. Ein Zweck solcher Versickerungsanlagen besteht darin, exzessiv anfallendes Regenwasser zu speichern und in das umgebende Erdreich einsickern zu lassen. Zu diesem Zweck kann die Versickerungsanlage V (Fig. 3 und 4) an einen zumindest einen Grobfilter aufweisenden Gully und auch, gegebenenfalls, an das weiterführende Kanalisationssystem angeschlossen sein. Die Versickerungsanlage wird unterirdisch eingebaut, häufig unter Verkehrsflächen, die mit Personenkraftwagen und gegebenenfalls sogar Lastkraftwagen befahren werden.

Das in Fig. 1 gezeigte Versickerungsmodul M hat einen Grundkörper G mit der Form eines Würfels mit sechs Außenwänden 1, 4, 5, 6, 7 und 8, die eben und zueinander exakt rechtwinkelig sind. Jede Außenwand ist eine Gitterstruktur aus Längs- und Querstegen 2, 3, die hochkant stehen und viereckige, im gezeigten Ausführungsfall sogar quadratische und gleichgroße Felder begrenzen. Die Seitenlänge des Würfels liegt beispielsweise zwischen 0,8 m bis 1,1 m.

In den Außenwänden sind in die Gitterstrukturen Gegenaufnahmen 9 eingeformt, die zum Anbringen von Verbindungselementen (nicht gezeigt) dienen, um mehrere Versickerungsmodule nebeneinander und/oder übereinander einzubauen und zu koppeln.

Entlang jeder Würfelkante ist eine nicht oder nur teilweise wasserdurchlässige Aussteifungs-Profilierung 10 integral eingeformt, die bei der gezeigten Ausführungsform aus rechtwinkelig zueinander verlaufenden, ineinander geführten Längsstegen 11 und 12 besteht, zwischen denen ein winkelhalbierender Längssteg 13 eingeformt ist, der die eigentliche Kante des Würfels definiert. Ferner sind in diesen Bereich der Aussteifungs-Profilierung 10 die Querstege 2 verlängert.

Die Würfelecken sind zusätzlich verstärkt, indem an jeder Würfelecke drei Diagonalstege 20 zusammengeführt sind. Dort sind gerundete oder kuppenförmige Eckbereiche zweckmäßig.

In jede Außenwand ist in zumindest weitgehend mittiger Anordnung eine im Grundzug rechteckige oder annähernd quadratische Einsetzöffnung 14 eingeformt, die zu einer innenliegenden, freien Kammer 19 führt. In der gezeigten Ausführungsform sind die Einsetzöffnungen 14 nur annähernd quadratisch, da sie gerundete Eckbereiche 16 und die Eckbereiche 16 verbindende, symmetrische konkav gewölbte Abschnitte 17 mit einer bei dieser Ausführungsform durchgehenden Auskleidung 15 aufweisen. Durch diese Formgebung definieren die Auskleidungen 15 der Einsetzöffnungen 14 in dem Grundkörper G entlang der Kantenbereiche insgesamt acht taillierte Säulen 18. Dies bedeutet, dass die Gitterstrukturen 2, 3 der Außenwände nicht notwendiger Weise zur inneren Kammer 19 wasserdurchlässig sind, obwohl gegebenenfalls (gestrichelt angedeutet) lokale Durchlässe 24 eingeformt sein können. Die innere Kammer 19 des Grundkörpers K ist frei und relativ glatt. Die Längs- und Querstege 2, 3, sind hochkant, d.h. parallel zu den Außenwänden geformt.

Die Öffnungsgröße der Einsetzöffnungen 14 beträgt zwischen 30 und 60 % der jeweiligen Außenwandfläche, vorzugsweise etwa 35 %.

Gemäß Fig. 2 wird das Versickerungsmodul M mit Zusatzbauteilen, nämlich Einsetzplatten 21 kombiniert, die wahlweise in Einsatzöffnungen 14 eingesetzt werden, bis sie bündig mit der Außenwand abschließen. Als Beispiel ist in Fig. 2 eine solche Einsetzplatte 21 gezeigt, die zum Einsetzen in die Einsetzöffnung 14 in der Außenwand 4 bestimmt ist. Die Einsetzplatte 21 weist eine Gitterstruktur aus Längs- und Querstegen 2', 3' auf, die zumindest bereichsweise wasserdurchlässig ist. Ferner weist die Einsetzplatte 21 eine durchgehende Verkleidung 23 auf, die als Passfläche in die Auskleidung 15 der Einsetzöffnung 14 passt. Gegebenenfalls werden Verriegelungs- oder Befestigungselemente oder Schnappelemente zum lösbaren Festlegen der Einsetzplatte 21 verwendet (nicht gezeigt), oder werden für diesen Zweck auch die Durchlässe 24 benutzt. In die Gitterstruktur 2', 3' der Einsetzplatte 21 ist, vorzugsweise, ein Ausschneidemuster 22 integriert, beispielsweise in Form konzentrischer Kreisstege. Dieses Ausschneide-Muster 22 dient zum Freilegen der jeweils gewünschten Öffnungsgröße zum Anschließen eines nicht gezeigten Rohstrangs.

Fig. 3 verdeutlicht eine in der Fertigstellung begriffene Versickerungsanlage V zum unterirdischen Einbau. Die Versickerungsanlage V besteht aus einer oberen und einer unteren Lage jeweils von sechs Versickerungsmodulen M, die mit ihren Außenwandflächen direkt aneinander gesetzt und (nicht gezeigt), vorzugsweise, z.B. über eingeformte oder eingesetzte Kupplungselemente, miteinander verbunden sind. Von den Einsetzöffnungen 14 sind noch einige freigelassen, die jedoch zur Fertigstellung der Versickerungsanlage V (Fig. 4) noch eingesetzt werden. Die innenliegenden Kammern der einzelnen Versickerungsmodule kommunizieren frei miteinander. Ferner kann zu Inspektionszwecken wahlweise jede Einsetzplatte 21 entnommen werden, beispielsweise auch um einen Reinigungszyklus durchzuführen. Alternativ ist es denkbar, aus Festigkeitsgründen auch die innenliegenden Einsetzöffnungen 14 durch Einsetzplatten zu verschließen, oder zumindest einige der innenliegenden Einsetzöffnungen. Die an den Außenwänden der Versickerungsanlage V eingesetzten Einsetzplatten 21 definieren mit den Außenwänden relativ ebene Abstützflächen für zumindest eine umhüllende Vlieslage, wie sie bei solchen Versickerungsanlagen üblicherweise vorgesehen wird. Zuleitende oder ableitende Rohrstränge können unter Nutzen der vielfach vorgesehenen Ausschneide-Muster beliebig angeschlossen oder eingeführt werden. Die Versickerungsanlage V wird entweder direkt in das Erdreich eingesetzt, oder auf eine Grundplatte oder ein Fundament 24, das z. B. wasserdurchlässig ist. Ferner könnte eine der obenliegenden Einsetzöffnungen zum Einbringen eines Schachts oder Gullys genutzt werden (zur Wasserzufuhr und/oder zu Inspektionszwecken).

Bei kleineren Baugrößen könnten gleich von vorneherein zwei oder mehr Grundkörper gemeinsam einstückig hergestellt werden. Genauso gut könnte ein Grundkörper G aus einzeln hergestellten Teilen zusammengefügt sein.

## Patentansprüche

1. Versickerungsmodul (M) aus Kunststoff zum Erstellen einer unterirdischen Versickerungsanlage (V), mit einem Grundkörper (G), dessen sechs zueinander paarweise senkrechte, außen ebene Außenwände (1, 4, 5, 6, 7, 8) zumindest teilweise wasserdurchlässige Gitterstrukturen (2, 3) aufweisen, und eine Innenkammer (19) begrenzen, und von denen zumindest einige jeweils eine annähernd rechteckige oder annähernd quadratische Einsetzöffnung (14) mit einer Öffnungsgröße aufweisen, die zwischen 30 % und 60 % der Außenwandfläche beträgt, wobei mit der Einsetzöffnungsgröße ausgebildete Einsetzplatten (21) mit einer zumindest bereichsweise wasserdurchlässigen Gitterstruktur (2', 3') zum wahlweisen Einsetzen in ausgewählte Einsetzöffnungen (14) vorgesehen sind, **dadurch gekennzeichnet, dass** der Grundkörper (G) ein Würfel mit jeweils zur Innenkammer (19) durchgängigen Einsetzöffnungen (14) in allen sechs Außenwänden ist, und dass die Innenkammer (19) frei von Verstrebungen oder Stützsäulen ist.

2. Versickerungsmodul nach Anspruch 1, **dadurch gekennzeichnet, dass** die Einsetzöffnungen (14) mit umfänglichen Auskleidungen (15) versehen sind.

3. Versickerungsmodul nach Anspruch 2, **dadurch gekennzeichnet, dass** die Auskleidungen (15) zumindest bereichsweise mit der Gitterstruktur (2, 3) kommunizierende Durchlässe aufweisen.

4. Versickerungsmodul nach Anspruch 1, **dadurch gekennzeichnet, dass** jede Einsetzplatte (21) eine umfängliche Verkleidung (2, 3) aufweist.

5. Versickerungsmodul nach Anspruch 1, **dadurch gekennzeichnet, dass** in die Gitterstruktur (2', 3') der Einsetzplatte (21) ein Ausschneidemuster (22) eingegliedert ist.

6. Versickerungsmodul nach wenigstens einem der vorhergehenden Ansprüche, **dadurch gekennzeichnet, dass** die Gitterstrukturen (2, 3; 2', 3') einander rechtwinkelig kreuzende Quer- und Längsstege umfassen, die überwiegend gleichgroße quadratische Felder begrenzen.

7. Versickerungsmodul nach Anspruch 1, **dadurch gekennzeichnet, dass** entlang der Würfelkanten in die Gitterstrukturen (2, 3) integrierte, verrippte und nicht oder nur teilweise wasserdurchlässige Aussteifungs-Profilierungen (10) vorgesehen sind.

8. Versickerungsmodul nach Anspruch 7, **dadurch gekennzeichnet, dass** die Aussteifungs-Profilierung (10) aus zwei senkrecht zueinander geführten Längsstegen (11, 12), einen dazwischen liegenden, winkelhalbierenden Längssteg (13), und verlängerten Querstegen (2) der Gitterstruktur (2, 3) geformt sind.

9. Versickerungsmodul nach Anspruch 8, **dadurch gekennzeichnet, dass** in der Aussteifungs-Profilierung (10) drei zusätzliche Diagonalstege (20) an der Würfelecke zusammengeführt sind, vorzugsweise an einer Rundung oder Kuppe.

10. Versickerungsmodul nach Anspruch 1, **dadurch gekennzeichnet, dass** die Umrisskontur der Einsetzöffnung (14) gerundete Eckbereiche (16) und die Eckbereiche (16) verbindende, nach außen konkav gewölbte, symmetrische Abschnitte (17) aufweist, deren Wölbung flacher ist als die Rundung der Eckbereiche.

11. Versickerungsmodul nach Anspruch 10, **dadurch gekennzeichnet, dass** die Einsetzöffnungen (14) in den Außenwänden acht Säulen (18) begrenzen, die außenseitig gerade und eben und in den Einsetzöffnungen (14) jeweils mit einer Taille in etwa mittig zwischen den Würfelecken konkav gewölbt sind.

12. Versickerungsmodul nach Anspruch 1, **dadurch gekennzeichnet, dass** jede Einsetzplatte (21) lösbar in der Einsetzöffnung (14) festlegbar ist.

13. Versickerungsmodul nach wenigstens einem der vorhergehenden Ansprüche, **dadurch gekennzeichnet, dass** das Versickerungsmodul (M) ein einstückiger Spritzguss-Formteil ist, vorzugsweise mit einer Seitenlänge von etwa 0,5 m bis 1,2 m.

## Claims

1. Percolation module (M) made from plastic material for constructing a subterranean percolation system (V), comprising a base body (G), having six flat outer walls (1, 4, 5, 6, 7, 8), being pairwise perpendicular to each other and including at least partially water permeable grid structures (2, 3) and commonly defining an interior chamber (19), of which outer walls at least several include a respective substantially rectangular or substantially square insertion opening (14) with a size amounting to between about 30% and 60% of the area of the outer wall, and further comprising insertion plates (21) formed with the size of the insertion openings each having an at least locally water permeable grid structure (2', 3') for selectively being inserted in selected insertion openings (14) **characterised in that** the base body (G) is a cube with insertion openings (14) in all six outer walls, each insertion opening (14) respectively leading to the interior chamber (19), and that the interior chamber (19) is free of struts or supporting pillars.

2. Percolation module according to claim 1, **characterised in that** the insertion openings (14) are provided with circumferential inside linings (15).

3. Percolation module according to claim 2, **characterised in that** the linings (15) at least in selected regions have passages communicating with the grid structure (2, 3).

4. Percolation module according to claim 1, **characterised in that** each insertion plate (21) has a circumferential lining (23).

5. Percolation module according to claim 1, **characterised in that** a cut-out pattern (22) is integrated into the grid structure (2', 3') of the insertion plate (21).

6. Percolation module according to at least one of the preceding claims, **characterised in that** the grid structures (2, 3); 2', 3') comprise lateral webs and longitudinal webs which cross each other at right angles and which predominantly define square fields of equal sizes.

7. Percolation module according to claim 1, **characterised in that** stiffening profiles (10) are provided along the edges of the cube, the stiffening profiles (10) being integrated into the grid structures (2, 3), and being rib-shaped and being either not water permeable or only partially water permeable.

8. Percolation module according to claim 7, **characterised in that** the stiffening profiles (10) are formed of two lengthwise interconnected longitudinal webs (11, 12) which extend perpendicular to each other, and by a longitudinal web (13) which is situated between the longitudinal webs (11, 12) and which divides the angle formed by the longitudinal webs (11, 12) in two halves, and by prolonged lateral webs (2) of the grid structure (2, 3).

9. Percolation module according to claim 8, **characterised in that** at a corner of a cube and between stiffening profiles (10) three additional interconnected diagonal webs (20) are, preferably, defining a rounded or hill-shaped contour.

10. Percolation module according to claim 1, **characterised in that** the circumferential contour of the insertion opening (14) has rounded corner regions (16) and symmetrical sections (17) interconnecting the corner regions, each section (17) being curved concavely outwardly, with the curvature of the section (17) being flatter than the curvature of the corner regions (16).

11. Percolation module according to claim 10, **characterised in that** the insertion openings (14) define along the cube edges eight pillars (18) in the outer walls, which pillars are straight and flat at the outer sides and are curved concavely respectively in each insertion opening (14) with a waist substantially in the middle between two corners of the cube.

12. Percolation module according to claim 1, **characterised in that** each insertion plate (20) is removably inserted into an insertion opening (14).

13. Percolation module according to at least one of the preceding claims, **characterised in that** the percolation module (M) is a unitary injection moulded form part, preferably with a side length of about 0.5 metres to 1.2 metres.

## Revendications

1. Module de filtration (m) en matiere plastique pour la creation d'une installation de filtration souterraine (v), comprenant un corps de base (g), dont les six parois exterieures (1, 4, 5, 6, 7, 8) exterieurement planes, perpendiculaires deux par deux les unes par rapport aux autres, presentent des structures grillagees (2, 3) au moins partiellement permeables a l'eau, et delimitent un compartiment interieur (19), et parmi lesquelles au moins quelques-unes presentent respectivement une ouverture d'insertion (14) approximativement rectangulaire ou approximativement carree ayant une taille d'ouverture qui est comprise entre 30 % et 60 % de la surface de paroi exterieure, des plaques d'insert (21) realisees a la taille de l'ouverture d'insertion etant prevues avec une structure grillagee (2', 3') permeable a l'eau au moins par secteur pour l'insertion facultative dans des ouvertures d'insertion (14) selectionnees, **caracterise en ce que** le corps de base (g) est un cube comprenant respectivement des ouvertures d'insertion (14) traversantes jusqu'au compartiment interieur (19) dans l'ensemble des six parois exterieures, et le compartiment interieur (19) est exempt d'entretoisements ou de colonnes de soutien.

2. Module de filtration selon la revendication 1, **caracterise en ce que** les ouvertures d'insertion (14) sont munies de cuvelages peripheriques (15).

3. Module de filtration selon la revendication 2, **caracterise en ce que** les cuvelages (15) presentent des voies communiquant au moins par secteur avec la structure grillagee (2, 3).

4. Module de filtration selon la revendication 1, **caracterise en ce que** chaque plaque d'insert (21) presente un chemisage peripherique (2, 3).

5. Module de filtration selon la revendication 1, **caracterise en ce qu**'un modele de decoupe (22) est integre dans la structure grillagee (2', 3') de la plaque d'insert (21).

6. Module de filtration selon l'une quelconque des revendications precedentes, **caracterise en ce que** les structures grillagees (2, 3 ; 2', 3') comprennent des etais transversaux et longitudinaux se croisant les uns les autres a angle droit, qui delimitent principalement des panneaux carres de meme taille.

7. Module de filtration selon la revendication 1, **caracterise en ce que** des profilages (10) de raidissement, integres dans les structures grillagees (2, 3), nervures et non permeables a l'eau ou seulement partiellement permeables a l'eau sont prevus le long des bords de cube.

8. Module de filtration selon la revendication 7, **caracterise en ce que** les profilages (10) de raidissement sont formes de deux etais longitudinaux (11, 12) rentrant l'un dans l'autre de maniere perpendiculaire, d'un etai longitudinal (1 3) bissecteur situe entre eux deux, et d'etais transversaux prolonges appartenant a la structure grillagee (2, 3).

9. Module de filtration selon la revendication 8, **caracterise en ce que** trois etais diagonaux (20) supplementaires sont assembles dans le profilage (10) de raidissement au niveau des coins de cube, de preference au niveau d'un galbe ou d'un dome.

10. Module de filtration selon la revendication 1, **caracterise en ce que** le trace de contour de l'ouverture d'insertion (14) presente des secteurs de coin (16) arrondis et les secteurs de coin (16) presentent des sections (17) symetriques, courbees de maniere concave vers l'exterieur, dont la courbure est plus plate que le galbe des secteurs de coin.

11. Module de filtration selon la revendication 10, **caracterise en ce que** les ouvertures d'insertion (14) delimitent dans les parois exterieures huit colonnes (18), qui sont exterieurement droites et planes et sont courbees de maniere concave dans les ouvertures d'insertion (14) respectivement avec un cintrage a peu pres median entre les coins de cube.

12. Module de filtration selon la revendication 1, **caracterise en ce que** chaque plaque d'insert (21) peut etre mis en place de maniere amovible dans les ouvertures d'insertion (14).

13. Module de filtration selon l'une quelconque des revendications precedentes, **caracterise en ce que** le module de filtration (m) est un corps moule par injection d'un seul tenant, de preference ayant une longueur laterale d'environ 0,5 m a 1,2 m.
